# EUROPEAN PATENT APPLICATION

(11) **EP 4 711 128 A1**
(43) Date of publication of application: **18.03.2026**
(21) Application number: 24806951.0
(22) Date of filing: 17.04.2024
(51) Int. Cl.: B32B 7/12, B32B 7/02, B32B 37/12, C09J 5/00, C09J 183/05, C09J 183/07

(54) **MULTILAYER BODY CAPABLE OF ACHIEVING HIGH PEEL STRENGTH EVEN WITH THIN ADHESIVE LAYER, METHOD FOR PRODUCING SAME, AND METHOD FOR BONDING BASE MATERIALS**

(30) Priority: 12.05.2023 JP 2023079179
(71) Applicant: Dow Toray Co., Ltd., Tokyo 140-8617 (JP)
(72) Inventor: NOZOE, Tsugio, Ichihara-shi Chiba 299-0108 (JP); TASAKI, Tomoko, Ichihara-shi Chiba 299-0108 (JP)
(74) Representative: Elkington and Fife LLP
(86) International application number: PCT/JP2024/015266
(87) International publication number: WO 2024/236997

(57) **Abstract**

[Problem]

To provide: a laminate body that has excellent industrial productivity, can be implemented at low cost, can be applied to laminate bodies using not only a base fabric/film base material but also various other base materials, and can achieve high peel strength even with a thin adhesive layer when an external force is applied to move the adhered base materials apart, thereby enabling the design of a compact structure; a method for manufacturing the same; and a method for adhering base materials together.

[Solution]

A laminate body comprising: a structure in which (S1) a first fabric- or sheet-like base material and (S2) a second fabric- or sheet-like base material are adhered together by (A) an adhesive layer in which two or more types of curable adhesive compositions, one having 2 to 5 times more stress at 10 mm elongation in a stress-strain curve when cured, are applied in parallel to each other and integrated with each other; a method for manufacturing the same; and the like.

## Description

### TECHNICAL FIELD

The present invention relates to: a laminate body that can achieve high peel strength even with a thin adhesive layer when an external force is applied to move the adhered base materials apart, thereby enabling the design of a compact structure; a method for manufacturing the same; and a method for adhering base materials together.

### BACKGROUND ART

Flat fabric-like base materials, film-like base materials, and plate-like base materials can be joined together by at least partially laminating a plurality of base materials by sewing, fusing/welding, or adhering, thereby ensuring a large total area and three-dimensional formability for an entire laminate body, and allowing for unfolding or expanding depending on the application. Therefore, the laminate body is required to have sufficient joining strength, and particularly peel strength, against external forces that move constituent base materials apart (typically, peeling or pulling of a base material). On the other hand, in recent years, there has been an increasing demand for lighter weight and space saving, and there is a demand for the laminate body to be stored as a compact structure or to be folded for storage.

However, with sewing, in order to ensure joining strength, the thickness of the fabric-like base material or sheet-like base material and a wide sewing site must be ensured, and the use of pinholes and sewing thread may reduce the joining strength, making it particularly difficult to store the laminate body as a compact structure while maintaining the strength of the base material. Furthermore, when joining fabrics and other sheet-like base materials, fusion/welding of the base materials may not ensure sufficient joining strength, and the laminate body may easily separate when tensile or peeling stress acts between the base materials.

In contrast thereto, for example, as described in Patent Document 1, when base materials are joined by an adhesive layer, there are advantages in which the structural integrity of a joint can be maintained without sewing, the weight can be reduced, and sufficient adhesive strength can be ensured between the base materials, thereby ensuring high peel strength. However, in general, to improve adhesive strength, the thickness of the adhesive layer must be ensured, and to achieve high adhesive strength (particularly peel strength against tensile stress that tends to move the base materials away from each other), a relatively thick adhesive composition that forms the adhesive layer must be applied, which poses a trade-off problem in that the laminate body cannot satisfy the required properties of a compact structure, such as miniaturization, thinning, foldability, and storability.

On the other hand, Patent Document 2 proposes a flexible EL light-emitting element that is a laminate body having a highly elastic adhesive layer formed by an elastic adhesive and a low-elastic adhesive layer formed by a low-elastic adhesive arranged aligned on a substrate. Specifically, when a flexible EL light-emitting element is created on a particularly flexible substrate, the highly elastic adhesive has excellent conformability when the substrate is bent and thus is less likely to be damaged, but has a low ability to prevent moisture penetration. In contrast thereto, low-elasticity adhesives have inferior conformability when the substrate is bent and thus may be damaged, but have a high ability to prevent moisture penetration. Therefore, in the laminate body described in Patent Document 2, by using both materials in combination, the flexibility of the substrate can be ensured while preventing moisture and oxygen from the outside from penetrating into the flexible EL light-emitting element, which would reduce the light-emitting performance and light-emitting life. However, these two types of adhesive layers are arranged on an outer periphery of the laminate body as mutually independent and separate adhesive layers, and are not capable of forming an integrated adhesive layer. Furthermore, the purpose of using adhesives with different elasticities in combination is, as described above, to expect the two types of adhesive layers to perform different independent roles, and not to achieve high peel strength by combining the two. In other words, the invention disclosed in Patent Document 2 has a problem and an effect different from those of the present invention, and there is no mention or suggestion of integrating different adhesive layers arranged in parallel to achieve high peel strength even with a thin adhesive layer against tensile stress that tends to move the base materials away from each other.

### RELATED ART DOCUMENTS

### PATENT DOCUMENTS

Patent Document 1: Japanese Unexamined Patent Application 2011-152913
Patent Document 2: Japanese Unexamined Patent Application 2011-204364

### SUMMARY OF THE INVENTION

### PROBLEM TO BE SOLVED BY THE INVENTION

An object of the present invention is to provide: a laminate body that has excellent industrial productivity, can be implemented at low cost, can be applied to laminate bodies using not only a base fabric/film base material but also various base material, and can achieve high peel strength even with a thin adhesive layer when an external force is applied to move the adhered base materials apart, thereby enabling the design of a compact structure; a method for manufacturing the same; and a method for adhering base materials together.

### MEANS FOR SOLVING THE PROBLEM

As a result of extensive studies, the present inventors discovered that the abovementioned problem can be solved by a laminate body including a structure in which
(S1) a first fabric- or sheet-like base material and
(S2) a second fabric- or sheet-like base material
   are adhered together by
   (A) an adhesive layer in which two or more types of curable adhesive compositions, one having 2 to 5 times more stress at 10 mm elongation in a stress-strain curve when cured, are applied in parallel to each other and integrated with each other, thereby achieving the present invention.

In particular, when the two adhered base materials constituting the laminate body deform so as to move away from each other, the curable adhesive composition that forms an adhesive layer with low stress at 10 mm elongation is preferably disposed on the side that is subject to deformation, the curable adhesive composition that forms an adhesive layer with high stress at 10 mm elongation is preferably disposed on the side that is not subject to deformation, and the adhesive layers with different stresses at 10 mm elongation are preferably integrated together.

Furthermore, the width of the integrated adhesive layer as a whole is preferably in the range of 5 to 50 mm, and the thickness thereof is preferably 1 mm or less. Furthermore, the curable adhesive compositions forming the adhesive layer are not particularly limited, but are preferably at least one elastic adhesive composition selected from acrylic adhesives, urethane adhesives, epoxy adhesives, vinyl acetate adhesives, styrene-butadiene rubber adhesives, natural rubber adhesives, and silicone adhesives, and are particularly preferably a curable silicone rubber composition that cures by a hydrosilylation reaction.

Similarly, the abovementioned problem can be solved by a method for manufacturing a laminate body, the method including:
step (I): a step for applying, in parallel to each other, the two or more types of curable adhesive compositions, one having 2 to 5 times more stress at 10 mm elongation in a stress-strain curve when cured, onto the first fabric- or sheet-like base material (S1);
step (II): a step for adhering the second fabric- or sheet-like base material (S2) onto the curable adhesive compositions applied in step (I);
step (III): a step for integrating the two or more types of curable adhesive compositions by contacting or pressure-bonding the compositions together before, after, or simultaneously with step (II); and
step (IV): a step for curing the integrated two or more types of curable adhesive compositions by a curing reaction to form the adhesive layer between the first fabric- or sheet-like base material (S1) and the second fabric- or sheet-like base material (S2).

In particular, when the two adhered base materials constituting the laminate body deform so as to move away from each other,
the aforementioned step (I) is preferably a step for applying the compositions such that the curable adhesive composition that forms an adhesive layer with low stress at 10 mm elongation is disposed on the side that is subject to deformation, and the curable adhesive composition that forms an adhesive layer with high stress at 10 mm elongation is disposed on the side that is not subject to deformation, and
the aforementioned step (III) is preferably a step for integrating the two or more types of curable adhesive compositions applied in parallel by pressure-bonding the compositions between the first fabric- or sheet-like base material (S1) and second fabric- or sheet-like base material (S2), which are adhered together, after or simultaneously with step (II), such that the thickness of the cured adhesive layer is 1 mm or less.

Furthermore, the abovementioned problem can be solved by a method for adhering base materials together, the method including:
step (I'): a step for applying, in parallel to each other, two or more types of curable adhesive compositions, one having 2 to 5 times more stress at 10 mm elongation in a stress-strain curve when cured, onto a first base material;
step (II'): a step for adhering a second base material onto the curable adhesive compositions applied in step (I');
step (III'): a step for integrating the two or more types of curable adhesive compositions by contacting or pressure-bonding the compositions together between the first base material and second base material, before, after, or simultaneously with step (II'); and
step (IV'): a step for curing the integrated two or more types of curable adhesive compositions by a curing reaction to form the adhesive layer between the first base material and second base material.
In this adhering method, the first base material and the second base material may independently be a fabric- or sheet-like base material.

### EFFECT OF THE INVENTION

The laminate body according to the present invention can be achieved by arranging two or more types of adhesive layers with different moduli in parallel between base materials and using an integrated adhesive layer. The laminate body therefore has superior industrial productivity compared to sewing or the like, can be implemented at low cost, and is versatile and can be applied to laminate bodies using not only a base fabric/film base material but also various other base materials. Furthermore, the laminate body according to the present invention can achieve high peel strength even with a thin adhesive layer when an external force is applied so as to move the adhered base materials apart. Therefore, a thinner, strongly adhered laminate body that has high peel strength can be obtained, and a laminate body can be obtained to design a structure that satisfies the required properties for compactness, such as miniaturization, thinning, foldability, and storability. Furthermore, the present invention can also provide a method for manufacturing the abovementioned laminate body and a method for adhering base materials together.

### BRIEF DESCRIPTION OF THE DRAWINGS

FIG. 1 is a cross-sectional view of a peel test piece according to one embodiment of the present invention;
FIG. 2 is an upper surface view of a peel test piece in which an adhesive A1 and adhesive B1 are arranged parallel and integrally, as observed through an upper surface base material 1, according to one embodiment of the present invention;
FIG. 3 is a perspective view of a peel test piece according to one embodiment of the present invention;
FIG. 4 is a cross-sectional view of a peel test piece during a peel test of a base material, according to one embodiment of the present invention;
FIG. 5 is stress-strain curves obtained when a peeling test was conducted independently for the adhesive A1 and adhesive B1 used in the present invention;
FIG. 6 is a stress-strain curve obtained when a peeling test was conducted for a peel test piece in which the adhesive A1 and adhesive B1 are arranged parallel and integrally, according to one embodiment of the present invention;
FIG. 7 is stress-strain curves obtained when a peeling test was conducted independently for an adhesive A2 and adhesive B2 used in the present invention;
FIG. 8 is a stress-strain curve obtained when a peeling test was conducted for a peel test piece in which the adhesive A2 and adhesive B2 are arranged parallel and integrally, according to one embodiment of the present invention;
FIG. 9 is a stress-strain curve obtained when a peel test was conducted for a peel test piece in which the adhesive A1 and adhesive B1 were arranged in a dot pattern as a comparative test; and
FIG. 10 is a stress-strain curve obtained when a peel test was conducted for a peel test piece in which the adhesive A1 and adhesive B1 were arranged in a mesh pattern as a comparative test.

### DESCRIPTION OF THE PREFERRED EMBODIMENTS

### [Laminate body]

The laminate body according to the present invention is formed from (S1) a first fabric- or sheet-like base material, (S2) a second fabric- or sheet-like base material, and (A) an adhesive layer between the base materials. The base material (S1) and the base material (S2) are preferably a laminate body in which at least a portion thereof is adhered together by the adhesive layer and which is designed to be deformed so as to move away from each other. Herein, deformation refers to the action of an external force on the laminate body that generates tensile stress that moves these base materials apart, and examples include deformation of the laminate body that involves pulling, peeling, releasing, expanding, and unfolding between the base material.

The type of laminate body is not particularly limited, and laminate bodies, in which sheet (film)-like base materials are adhered to each other, a sheet (film)-like base material and a base fabric (textile) are adhered to each other, or base fabrics are adhered to each other, are known as materials used in outdoor products, packaging materials, protective sheets, functional films, vehicle airbags, and the like. Examples thereof include laminated films, laminated plates, laminated fabrics, and laminated sheets. Note that so long as the laminate body has the structure of the present invention (particularly the structure of an adhesive layer), the laminate body may be a multi-layer laminate body in which a plurality of two laminate bodies are adhered together. For example, the laminate body may be not only be a laminate body having the adhesive layer (A) between the two base materials (S1, S2) such as "S1/A/S2" but also a structure including a plurality of laminate bodies such as "S1/A/S2/A/S1" or "S1/A/S2/A/S1/A/S2". Furthermore, a coating layer (e.g., a covering/coating layer made of a silicone rubber layer for the purpose of reinforcing heat resistance) may be provided on the inside or outside of the base material constituting the laminate body for the purpose of improving heat resistance, flame retardancy, or strength of the base material, or the like. Furthermore, as described above, the base materials may be different or the same, and may be, and are preferably, laminate bodies in which, for example, thermoplastic resin film base materials, base fabrics, or a thermoplastic resin film and base fabric are combined and adhered together. Note that a functional coating layer may be provided on the entire laminate body for the purpose of improving heat resistance, flame retardancy, strength of the base material, and the like. In addition, if there is a specific site on the laminate body that is particularly subject to strong heat or tensile stress, the laminate body may further include a reinforcing base material or a heat-resistant base material for the purpose of reinforcement, damage prevention, or improvement of heat resistance or the like.

The first fabric- or sheet-like base material (S1) and the second fabric- or sheet-like base material (S2) are not particularly limited, and S1 and S2 may be the same or different.

The fabric base material is a textile or base fabric, preferably contains fibers, may be a woven material, knitted material, or nonwoven fabric, and may be sewn entirely or partially. Of these, woven materials are preferable because the mechanical strength thereof is high, and a biaxial structure combining a plurality of warp threads and a plurality of weft threads is preferable. A triaxial structure combining a plurality of warp threads, a plurality of weft threads, and a plurality of diagonal threads is also possible. Of these, a biaxially structured base fabric is preferable, and a plain woven material is more preferable from the perspective of strength and ease of manufacturing. Plain weave fabrics are woven with warp and weft threads intersecting each other alternately, and therefore have more intersecting points between warp and weft threads than fabrics woven with other weaves, such as twill and satin weaves, and have higher strengths, such as tensile strength, tear strength, and the like, making the plain weave fabrics particularly useful when the laminate body according to the present invention is used in applications subjected to instantaneous, strong tensile stress. The weave density is preferably at least 35 threads per inch for both the warp and weft threads. Furthermore, the total fineness of the threads is not limited, but is preferably within the range of 100 to 2,000 dtex. Furthermore, the base fabric also includes OPW (One-Piece Woven), which is not a flat base fabric but is woven seamlessly into a bag shape so as to have a curved surface to match the shape of a desired product.

The fibers may be synthetic fibers, natural fibers, regenerated fibers, semi-synthetic fibers, inorganic fibers, and combinations thereof (including mixed spinning and mixed weaves). Of these, synthetic fibers, and particularly polymer fibers, are preferable. As the fibers, composite fibers, such as core-sheath type fibers, side-by-side type fibers, split type fibers, and the like, can also be used. For example, natural fiber base fabrics or textiles selected from cotton, hemp, or flax or synthetic fiber base fabrics or textiles such as polyamide or polyaramid fibers (e.g., nylon base fabrics), polyimide fibers, or polyester fibers may be used in the laminate body of the present invention. Note that the natural fibers selected from cotton, hemp, or flax have a high carbonization point of 500°C to 580°C, and therefore have excellent heat resistance, and are advantageous in that these fibers are less likely to melt or be damaged due to heat, even when exposed to high temperatures, for example, when the laminate body is unfolded/deformed by expansion gas or the like.

A sheet-like base material is a flat base material (excluding the abovementioned fabrics/base fabrics), and includes base materials in the form of a sheet, film, and plate. The type and material of the sheet-like base material are not particularly limited, and may be paper, wood, metal, or synthetic resin, and may be cardboard or paper; wood (plywood) sheets; aluminum sheets and other metal sheets; or polyester sheets, polyamide sheets, polyimide sheets, polyaramid sheets, polyethylene sheets, polyvinyl chloride sheets, polyurethane sheets, polycarbonate sheets, acrylic sheets, and other synthetic resin sheets. Furthermore, these sheet-like base materials may have a structure in which a plurality of sheets are laminated (e.g., a composite film, film-laminated paper, or the like).

The laminate body of the present invention is characterized in having a structure in which the base materials are adhered together by (A) the adhesive layer in which two or more types of curable adhesive compositions, one having 2 to 5 times more stress at 10 mm elongation in a stress-strain curve when cured, are applied in parallel to each other and integrated with each other.

A curable adhesive composition used in the laminate body of the present invention includes a combination of a composition having a high stress and a composition having a low stress at 10 mm elongation in a stress-strain curve of the adhesive layer obtained when each composition is independently cured (hereinafter, sometimes simply referred to as "stress-strain curve"), and is characterized in that the stress at 10 mm elongation in the stress-strain curve of the adhesive layer having a high stress is in the range of 2 to 5 times, and preferably in the range of 2 to 4 times, that of the adhesive layer having a low stress. Herein, the stress-strain curve of the adhesive layer in the present invention was obtained by using a tensile tester to measure a test piece having a 1 mm thick adhesive layer under conditions of 25°C and 50% RH (relative humidity) at a tension rate of 200 mm/min. Note that if the stress of two or more types of adhesive layers is less than the lower limit, the stress-strain curves of the two do not significantly differ, and the adhesive layer as a whole, which is formed by integrating the two, may not be able to achieve high peel strength. Conversely, if the stress of two or more types of adhesive layers exceeds the upper limit, the difference in moduli between the two becomes too large, and even if the two are integrated, the adhesive layers tend to exhibit independent properties. Therefore, the integrated adhesive layer as a whole may not be able to achieve high peel strength.

The adhesive layer used in the laminate body of the present invention is characterized in being an adhesive layer formed by applying, in parallel to each other and integrated with each other, two or more types of curable adhesive compositions, which have different stresses at 10 mm elongation in the stress-strain curve of the adhesive layer. Note that the number of curable adhesive compositions having different stresses may be two or three or more, but from the perspective of workability and technical effect, two types of curable adhesive compositions are preferably used.

Herein, "applied in parallel to each other" means that two or more types of pre-cured curable adhesive compositions are applied to base materials without intersecting each other. If the two are applied intersecting each other in a mesh pattern or dispersed in a dot-like pattern, the technical effect of the present invention may not be achieved even if the adhesive layers are integrated.

Furthermore, an integrated adhesive layer means that two or more types of curable adhesive compositions form an integrated adhesive layer without generating a gap between the adhesive layers before or during curing. For example, two or more types of curable adhesive compositions may be applied in parallel to base materials without intersecting each other, with substantially no gaps therebetween, and upon curing, an integrated adhesive layer may be formed without any gaps therebetween. Furthermore, two or more types of curable adhesive compositions may be applied in parallel to base materials without intersecting each other, and before or during curing, the base materials may be laminated. Moreover, the two or more types of curable adhesive compositions may be brought into contact or pressure-bonded between the base materials by applying an external force, such as pressing of the base materials or the like, to form an integrated adhesive layer without creating a gap between the two upon curing. Herein, at an interface between two or more types of curable adhesive compositions, the different compositions may be in contact with each other or may be partially mixed together, and the two different types of compositions are particularly preferably cured in a partially mixed state at contact surfaces between the two, forming an adhesive layer in which both are integrated. However, as mentioned above, in order to achieve the technical effect of the present invention, the two or more types of curable adhesive compositions must be applied in parallel so as to not intersect with each other. If the two compositions completely mix together, the technical effect may not be achieved.

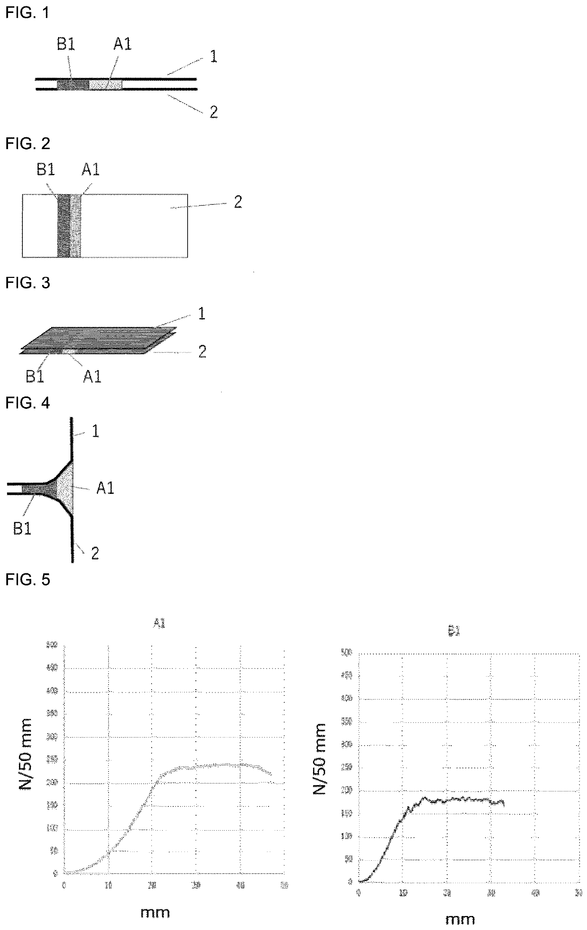

The adhesive layer according to the present invention has a structure in which adhesive layers with different stresses are integrated by contact or mixing without forming a void therebetween, and the adhesive layers with different stresses are arranged parallel to each other. Herein, the adhesive layer on the side with higher stress is a high-modulus adhesive layer, which firmly adheres the base materials together and prevents the base materials from separating, but has inferior deformability in response to external forces, particularly tensile forces acting in a direction that moves the base materials apart. On the other hand, the adhesive layer on the side with lower stress is a low-modulus adhesive layer, which, when used alone, has insufficient adhesive strength between the base materials, but is flexible and has high deformability, particularly in response to tensile forces acting in a direction that moves the base materials apart. Therefore, by arranging these adhesive layers in parallel between the base materials and then integrating such that no gaps are formed between the adhesive layers, when the two base materials are deformed so as to move away from each other due to a tensile force (including, for example, external forces such as expansion, unfolding, elongation, or the like between the base materials and the action of inflation gas, and the like), the low-modulus adhesive layer on the side that is subject to deformation undergoes a large deformation, alleviating the tensile force between the base materials, while the high-modulus adhesive layer on the side that is not subject to deformation can continue to firmly adhere the base materials together, as depicted in FIG. 5, for example. As a result, even if the adhesive layer is as thin as 1 mm or less, when an external force acts to separate the adhered base materials, the adhesive layer as a whole can achieve high peel strength.

This change in adhesive behavior can be confirmed by the difference between the stress-strain curves of the adhesive layers obtained using each adhesive layer separately and the stress-strain curve of the adhesive layer obtained by arranging both layers in parallel and then integrating. (See, for example, the stress-strain curves depicted in FIGS. 5 and 6, and FIGS. 7 and 8)

Note that from the perspective of the technical effect of the present invention, when the two adhered base materials constituting the laminate body deform so as to move away from each other, the curable adhesive composition that forms an adhesive layer with low stress at 10 mm elongation is particularly preferably disposed on the side that is subject to deformation, the curable adhesive composition that forms an adhesive layer with high stress at 10 mm elongation is particularly preferably disposed on the side that is not subject to deformation, and the adhesive layers with different stresses at 10 mm elongation are particularly preferably integrated together.

The adhesive strength of the two or more types of curable adhesive compositions constituting the adhesive layer can be appropriately designed in accordance with the type of laminate body and the tensile stress and peel strength acting on the laminate body. In particular, when the laminate body is unfolded by a strong expansion force caused by inflation gas or the like, such as in a vehicle airbag, it is preferable that, on the basis of the stress-strain curve of the adhesive layer measured by the aforementioned method, the following conditions are satisfied among the two or more types of curable adhesive compositions forming the adhesive layer:
(a1) the stress Fₐ₁ at 10 mm elongation of the adhesive layer formed by curing the curable adhesive composition having the highest tensile stress is in the range of 40 to 240 (N/50 mm),
(a2) the stress Fₐ₂ at 10 mm elongation of the adhesive layer formed by curing the curable adhesive composition having the lowest tensile stress is in the range of 20 to 60 (N/50 mm), and
the value of [Fₐ₁/Fₐ₂] falls in the range of 2.0 to 4.0. In practice, the stress Fₐ₁ may be in the range of 40 to 200, or 50 to 180 (N/50 mm), and the stress Fₐ₂ may be in the range of 20 to 55, or 25 to 50 (N/50 mm). Furthermore, the value of [Fₐ₁/Fₐ₂] may be in the range of 2.5 to 3.5.

In the laminate body according to the present invention, the integrated adhesive layer is preferably formed so as to adhere two base materials together. For example, in outdoor products, packaging materials, protective sheets, functional films, vehicle airbags, and the like, when two fabric- or sheet-like base materials are adhered together to form an adhesive layer between the base materials as a substitute for sewing or to ensure the surface area of the entire laminate body, the integrated adhesive layer of the present invention is preferably formed so as to adhere the end parts of the base materials together. Furthermore, from the perspective of satisfying the required properties for compactness, such as miniaturization, thinning, foldability, and storability, the adhesive layer is particularly preferably designed to be thin overall.

Specifically, the width of the entire integrated adhesive layer is in the range of 5 to 50 mm, and in practice, may be in the range of 10 to 45 mm.

The laminate body according to the present invention has the advantage in being able to achieve high peel strength even when the thickness of the entire adhesive layer is designed to be thin in order to satisfy the required properties for compactness. The specific thickness of the adhesive layer can be designed appropriately depending on the intended application of the laminate body and the type of base material, but in applications such as outdoor products, packaging materials, protective sheets, functional films, vehicle airbags, and the like, the thickness of the integrated adhesive layer as a whole (after curing) can be designed to be 1 mm or less, and the thickness of the adhesive layer may be in the range of 0.01 to 1.00 mm, 0.05 to 1.00 mm, or 0.10 to 1.00 mm. Note that the thickness of the adhesive layer can be designed to be thin by means such as applying the curable adhesive composition before curing between the base material, sandwiching a spacer as necessary, and then pressure-bonding the adhesive layer from one of the base materials, or the like. Even with an adhesive layer of 0.9 mm or less, 0.8 mm or less, 0.7 mm or less, 0.6 mm or less, or 0.5 mm or less (for example, an adhesive layer thickness in the range of 0.05 to 0.50 mm, 0.10 to 0.50 mm), a practical peel strength can be achieved. This allows the thickness of the entire laminate body to be designed to be thin compared to normal sewing, the use of adhesives, or the like, and has the advantage of being easily applicable to very compact structures such as folding structures and the like.

The curable adhesive composition that forms the adhesive layer is not particularly limited so long as the stress conditions at 10 mm elongation in the stress-strain curve during curing described above are satisfied, and two or more types of curable adhesive compositions that have different stresses in the adhesive layer can be used without particular limitation. However, from the perspective of workability and technical effect, two types of curable adhesive compositions are preferable, and because the adhesive layer has a stress at 10 mm elongation, these are preferably elastic adhesive compositions. Furthermore, the adhesive layers according to the present invention must be arranged by applying the layers in parallel and then integrating without any gaps, and therefore, the same or similar curable adhesive compositions having adhesive layers with different moduli when cured (i.e., high modulus side/low modulus side) are particularly preferably selected and used from a practical standpoint.

Specifically, the curable adhesive compositions forming the adhesive layer according to the present invention are preferably mutually independently at least one elastic adhesive composition selected from acrylic adhesives, urethane adhesives, epoxy adhesives, vinyl acetate adhesives, styrene-butadiene rubber adhesives, natural rubber adhesives, and silicone adhesives. Note that when heat resistance and flame retardancy are required for the laminate body and an application thereof, the use of a silicone adhesive is particularly preferable. Note that seam sealants, which are adhesives used to seal seams, and particularly silicone-based seam sealants (commercially available from Dow Toray Co., Ltd., or the like), can be suitably used in the present invention.

The curing mechanism of the silicone adhesive that can be used in the present invention is not limited, and examples thereof include addition reactions, condensation reactions, radical reactions caused by organic peroxides, radical reactions caused by UV irradiation, and the like. In particular, a curable silicone rubber composition that cures by addition reaction is particularly preferably used, because this composition cures quickly at a relatively low temperature.

One embodiment of the laminate body according to the present invention uses an adhesive layer obtained by applying two types of curable silicone rubber compositions, each of which has a stress at 10 mm elongation in the stress-strain curve upon curing within the aforementioned range, in parallel to each other and integrating the compositions into one layer. Such a curable silicone rubber composition contains:
(A) 100 parts by mass of a diorganopolysiloxane having at least two alkenyl groups in a molecule;
(B) 5 to 100 parts by mass of an organopolysiloxane resin and/or inorganic filler;
(C) an organopolysiloxane having at least two silicon atom-bonded hydrogen atoms in a molecule {in an amount such that the amount of silicon atom-bonded hydrogen atoms in this component is 0.6 to 20 mol per 1 mol of total alkenyl groups in components (A) and (B)}; and
(D) a catalytic amount of a hydrosilylation reaction catalyst, and
the stress at 10 mm elongation in the stress-strain curve during curing can be designed by the type and polymer length of component (A), the type and amount of component (B), the type of component (C) (organopolysiloxane as a crosslinking agent or chain extender), and the crosslinking density. Furthermore, the curable silicone rubber composition may optionally contain an adhesion imparting agent, a curing retarder, a coloring material, and the like.

Component (A) is a diorganopolysiloxane having at least two alkenyl groups in a molecule. Examples of alkenyl groups in component (A) include vinyl groups, allyl groups, butynyl groups, pentenyl groups, hexenyl groups, and other alkenyl groups with 2 to 12 carbon atoms, with vinyl groups being preferred. Furthermore, examples of silicon atom-bonded organic groups other than alkenyl group in component (A) include: methyl groups, ethyl groups, propyl groups, and other alkyl groups with 1 to 12 carbon atoms; phenyl groups, tolyl groups, xylyl groups, and other aryls with 6 to 12 carbon atoms; and 3-chloropropyl groups, 3,3,3-trifluoropropyl groups, and other alkyl halide groups with 1 to 12 carbon atoms, with methyl groups and phenyl groups being preferred.

Component (A) is a substantially linear organopolysiloxane, but may have a branch in part of a molecular chain. Furthermore, the viscosity of component (A) is not limited, but the viscosity at 25°C is preferably within the range of 100 to 100,000 mPa·s or 1,000 to 50,000 mPa·s. This is because when the viscosity of component (A) is at or above the lower limit of the aforementioned range, the mechanical strength of a resulting silicone rubber layer is enhanced, but when the viscosity is at or below the upper limit of the range, the coatability of the resulting silicone rubber composition improves. Note that the viscosity of component (A) can be measured by a rotational viscometer in accordance with JIS K7117-1.

Examples of component (A) include a dimethylpolysiloxane blocked with a dimethylvinylsiloxy group at both ends of a molecular chain, a dimethylsiloxane / methylvinylsiloxane copolymer blocked with a dimethylvinylsiloxy group at both ends of a molecular chain, a dimethylsiloxane / methylphenylsiloxane copolymer blocked with dimethylvinylsiloxy group at both ends of a molecular chain, and a methyl (3,3,3-trifluoropropyl) siloxane / methylvinylsiloxane copolymer blocked with a dimethylvinylsiloxy group at both ends of a molecular chain.

Component (B) is an organopolysiloxane resin for improving the mechanical strength and adhesiveness of the silicone rubber layer, or an inorganic filler that is added to adjust the viscosity of the composition or to improve the mechanical strength, heat resistance, or flame retardancy of the silicone rubber layer. The organopolysiloxane resin of component (B) has a resinous molecular structure, in other words, an organopolysiloxane mainly containing, as a component, a siloxane of a Q unit expressed by the formula SiO_{4/2} or a siloxane of a T unit expressed by the formula RSiO_{3/2}, and may contain, as another siloxane unit, a siloxane of a D unit expressed by the formula R₂SiO_{2/2} or a siloxane of an M unit expressed by the formula R₃SiO_{1/2}. In the formula, R represents a monovalent hydrocarbon group with 1 to 12 carbon atoms. Specific examples thereof include: methyl groups, ethyl groups, propyl groups, and other alkyl groups with 1 to 12 carbon atoms; vinyl groups, allyl groups, butenyl groups, pentenyl groups, hexenyl groups, and other alkenyl groups with 2 to 12 carbon atoms; phenyl groups, tolyl groups, xylyl groups, and other aryl groups with 6 to 12 carbon atoms; and 3-chloropropyl groups, 3,3,3-trifluoropropyl groups, and other halogenated alkyl groups with 1 to 12 carbon atoms, with methyl groups, vinyl groups, and phenyl groups being preferred. In particular, the organopolysiloxane resin of component (B) preferably contains an alkenyl group in a molecule, as this further improves the mechanical strength of the silicone rubber layer.

Examples of the organopolysiloxane resin of component (B) include resins containing (CH₃)₃SiO_{1/2} units and SiO_{4/2} units, resins containing (CH₃)₃SiO_{1/2} units, (CH₂=CH)SiO_{3/2} units, and SiO_{4/2} units, resins containing (CH₂=CH)(CH₃)₂SiO_{1/2} units and SiO_{4/2} units, and resins containing (CH₂=CH)(CH₃)₂SiO_{1/2} units, (CH₂=CH)SiO_{3/2} units, and SiO_{4/2} units. Furthermore, those which are liquid at ambient temperature or those having compatibility with component (A) even as a solid are preferred.

On the other hand, well-known inorganic fillers can be used as the inorganic filler of component (B). Specific examples thereof include: fumed silica, precipitated silica, calcined silica, and other fine powder silica fillers; fumed titanium oxide and other reinforcing fillers; crushed quartz, diatomaceous earth, iron oxide, titanium oxide, aluminum oxide, aluminum hydroxide, calcium carbonate, magnesium carbonate, magnesium hydroxide, and other non-reinforcing fillers; and fillers obtained by treating these fillers with an organosilane, organopolysiloxane, or other organosilicon compound. Of these, ultrafine powder silica having a specific surface area of 50 m²/g or more is preferred. Of these, surface-treated ultrafine powder silica, such as silica that has been surface-treated in advance with organosilane, organosilazane, diorganocyclopolysiloxane, or the like, is more preferable.

The amount of component (B) is in the range of 5 to 100 parts by mass, and preferably 10 to 80 parts by mass, with respect to 100 parts by mass of component (A), as this improves the pressure-sensitive adhesive strength of the resulting adhesive layer and the permeability thereof into a base fabric, while also improving thin layer application properties, thereby achieving the thin adhesive layer required in the present invention. Furthermore, when ultrafine powder silica is used as component (B), the amount is preferably in the range of 5 to 15 parts by mass with respect to 100 parts by mass of component (A). This is because if the amount of the fine powder silica exceeds 15 parts by mass, the viscosity of the composition becomes too high, making it difficult to coat the base fabric without a solvent, and if the amount is less than 5 parts by mass, the mechanical strength of the silicone rubber layer is reduced.

Component (C) is an organopolysiloxane serving as a crosslinking agent of the composition and having at least two silicon atom-bonded hydrogen atoms in a molecule. Examples of silicon atom-bonded organic groups other than hydrogen atoms in component (C) include: methyl groups, ethyl groups, propyl groups, and other alkyl groups with 1 to 12 carbon atoms; phenyl groups, tolyl groups, xylyl groups, and other aryls with 6 to 12 carbon atoms; and 3-chloropropyl groups, 3,3,3-trifluoropropyl groups, and other alkyl halide groups with 1 to 12 carbon atoms, with methyl groups and phenyl groups being preferred.

The molecular structure of component (C) is limited, and examples include linear structures, branched chain structures, partially branched linear structures, cyclic structures, and resinous structures. There are no limitations on the viscosity of component (C), but the kinematic viscosity at 25°C is preferably in the range of 1 to 1,000 mm²/s. This is because when the viscosity of component (C) is at or above the lower limit of the aforementioned range, the mechanical strength of a resulting silicone rubber layer is enhanced, but when the viscosity is at or below the upper limit of the range, the coatability of the resulting silicone rubber composition improves. Note that the viscosity of component (C) can be measured by an Ubbelohde viscometer in accordance with JIS Z8803.

Examples of component (C) include a methylhydrogenpolysiloxane blocked with a trimethylsiloxy group at both ends, a dimethylsiloxane / methylhydrogensiloxane copolymer blocked with a trimethylsiloxy group at both ends, a methylphenylsiloxane / methylhydrogensiloxane copolymer blocked with a dimethylphenylsiloxy group at both ends, a cyclic methylhydrogenpolysiloxane, and a copolymer containing dimethylhydrogensiloxy units and SiO_{4/2} units. Furthermore, a diorganopolysiloxane blocked with a diorganohydrogensiloxy group at both ends (e.g., a dimethylpolysiloxane blocked with a dimethylhydrogensiloxy group at both ends, or the like), which serves as a so-called chain extender, may be used in combination as part or all of component (C), and can be used to adjust the mechanical strength, elongation, and flexibility of the adhesive layer obtained by curing the composition.

The amount of component (C) is an amount where the silicon atom-bonded hydrogen atoms in the organopolysiloxane is 0.6 to 20 mols, and preferably 0.6 to 15 mols, 0.8 to 10 mols, or 0.8 to 5.0 mols, with respect to a total of 1 mol of the alkenyl group in components (A) and (B).

Component (D) is a hydrosilylation reaction catalyst for curing the composition. Such component (D) includes, for example, platinum-based catalysts, rhodium-based catalysts, and palladium-based catalysts. Platinum-based catalysts are preferred due to the ability to remarkably promote curing. The platinum-based catalyst may be, for example, a catalyst platinum fine powder, chloroplatinic acid, an alcohol solution of chloroplatinic acid, a platinum-alkenyl siloxane complex, a platinum-olefin complex, a platinum-carbonyl complex, or a catalyst in which these platinum-based catalysts are dispersed or encapsulated with a thermoplastic resin such as silicone resin, polycarbonate resin, acrylic resin, or the like. Of these, platinum-alkenylsiloxane complexes are preferable. Examples of the catalyst for promoting the hydrosilylation reaction include non-platinum-based metal catalysts such as iron, ruthenium, iron/cobalt, and the like. Furthermore, in addition to heating, a photoactive platinum complex-curing catalyst or other hydrosilylation reaction catalyst that promotes a hydrosilylation reaction catalyst by high energy ray irradiation of ultraviolet rays or the like may be used. The photoactive hydrosilylation reaction catalyst may be a β-diketone platinum complex or a platinum complex having a cyclic diene compound as a ligand.

The amount of component (D) is a catalytic amount, and is preferably an amount such that, when the entire curable silicone rubber composition is taken as 100 parts by mass, metal atoms are preferably present in the range of 0.01 to 500 ppm by mass, 0.01 to 100 ppm by mass, 0.01 to 80 ppm by mass, or 0.10 to 80 ppm by mass. If the amount is less than the lower limit, the curing reaction may not sufficiently proceed, whereas if the amount is more than the upper limit, the cost may be uneconomical.

The abovementioned curable silicone rubber composition may contain another optional component so long as the component does not impair a technical effect of the present invention. Specific examples of such optional components include: curing retarders; adhesion imparting agents; polydimethylsiloxanes, polydimethyldiphenylsiloxanes, and other non-reactive organopolysiloxanes; phenol-based antioxidants, quinone-based antioxidants, amine-based antioxidants, phosphorus-based antioxidants, phosphite-based antioxidants, sulfur-based antioxidants, or thioether-based antioxidants, and other antioxidants; triazole-based light stabilizers, benzophenone-based light stabilizers, and other light stabilizers; phosphate ester-based flame retardants, halogen-based flame retardants, phosphorus-based flame retardants, antimony-based flame retardants, and other flame retardants; one or more type of antistatic agents such as cationic surfactants, anionic surfactants, nonionic surfactants, or the like; dyes; pigments; and the like.

The composition may contain an adhesion imparting agent as an optional component, such as (E) an epoxy group-containing organosilicon compound. Examples of component (E) include: γ-glycidoxypropyltrimethoxysilane, β-(3,4-epoxycyclohexyl)ethyltrimethoxysilane, and other epoxy group-containing organoalkoxysilanes; and epoxy group-containing organopolysiloxanes having a silicon atom-bonded vinyl group and an alkoxy group, epoxy group-containing organopolysiloxanes having a silicon atom-bonded hydrogen atom, epoxy group-containing organopolysiloxanes having a silicon atom-bonded hydrogen atom and an alkoxy group, and other epoxy group-containing organopolysiloxanes.

Furthermore, the composition may also contain (F) an organotitanium compound as an optional component. Examples of such component (F) include: tetraisopropyl titanate, tetrabutyl titanate, tetraoctyl titanate, and other organic titanate esters; and diisopropoxybis(acetylacetonate)titanium, diisopropoxybis(ethyl acetoacetate)titanium, and other titanium chelating compounds . The amount of component (F) is within the range of 0.1 to 5 parts by mass with respect to 100 parts by mass of component (A).

Furthermore, the composition may also contain (G) a curing retarder as an optional component. Examples of such component (G) include: 3-methyl-1-butyn-3-ol, 3,5-dimethyl-1-hexyn-3-ol, phenylbutynol, and other alkyne alcohols; 3-methyl-3-penten-1-yne, 3,5-dimethyl-3-hexen-1-yne, and other eneyne compounds; and tetramethyltetrahexenylcyclotetrasiloxane and benzotriazole. The amount of component (G) is usually in the range of 0.01 to 10 parts by mass with respect to 100 parts by mass of component (A).

The method for preparing such a curable silicone rubber composition is not limited, and the composition can be easily manufactured by homogenous kneading in a kneader mixer, pressure kneader mixer, Ross mixer, or other mixer.

Such a curable silicone rubber composition may be a one-component package, or may be a multi-component curable silicone rubber composition, in which a main agent and a crosslinking agent/curing agent components and the like, are separated into two or more packages.

### [Laminate Body Manufacturing Method]

The laminate body according to the present invention can be obtained by a manufacturing method including the following steps:
step (I): a step for applying, in parallel to each other, the two or more types of curable adhesive compositions, one having 2 to 5 times more stress at 10 mm elongation in a stress-strain curve when cured, onto the first fabric- or sheet-like base material (S1);
step (II): a step for adhering the second fabric- or sheet-like base material (S2) onto the curable adhesive compositions applied in step (I);
step (III): a step for integrating the two or more types of curable adhesive compositions by contacting or pressure-bonding the compositions together before, after, or simultaneously with step (II); and
step (IV): a step for curing the integrated two or more types of curable adhesive compositions by a curing reaction to form the adhesive layer between the first fabric- or sheet-like base material (S1) and the second fabric- or sheet-like base material (S2)

Step (I) is a step for applying the two or more types of curable adhesive compositions having 2 to 5 times stress at 10 mm elongation onto the first fabric- or sheet-like base material (S1) such that the compositions are parallel to each other. The application method is not particularly limited, and can be performed using an instrument such as a dispenser or the like. Note that the dispenser that can be used may be capable of mixing multiple components, and application is performed in parallel. Thus, the application instrument in which a plurality of dispensers are arranged in parallel, such as a twin dispenser or the like, may be used. Note that the base material type and the curable adhesive compositions are as already described.

In step (I), the two or more types of curable adhesive compositions must be applied in parallel to each other, and the uncured curable adhesive compositions are preferably applied in linear, parallel lines. Note that the different uncured curable adhesive compositions applied linearly may be in contact with each other at the time of application in order to be ultimately integrated, or may be applied with a gap therebetween such that the compositions can be brought into contact or pressure-bonded in the subsequent step (III). Furthermore, the uncured curable adhesive composition applied linearly is preferably applied continuously in parallel onto entire outer peripheries of the base materials or to a laminated site so as not to create a gap between the base materials, depending on the application of the ultimately obtained laminate body. On the other hand, when applying different uncured curable adhesive compositions, if the compositions are completely intersected and applied in a mesh pattern, or if the compositions are applied in a layered or dispersed dot pattern, the technical effect of achieving high peel strength as an adhesive layer as a whole by using two or more types of adhesive layers with different moduli in combination may not be achieved.

In the aforementioned step (I), when the two adhered base materials constituting the laminate body are deformed so as to move away from each other, the curable adhesive composition is preferably supplied so that the curable adhesive composition that forms the adhesive layer that has a low stress at 10 mm elongation is arranged on the side that is subjected to deformation, and the curable adhesive composition that forms the adhesive layer that has a high stress at 10 mm elongation is arranged on the side that is not subjected to deformation. As already described, this is because by arranging these adhesive layers with different moduli in parallel between the base materials and then integrating such that no gaps are formed between the adhesive layers, when the two base materials are deformed so as to move away from each other due to a tensile force (including, for example, external forces such as expansion, unfolding, elongation, or the like between the base materials and the action of inflation gas, and the like), the low-modulus adhesive layer on the side that is subject to deformation undergoes a large deformation, alleviating the tensile force between the base materials, while the high-modulus adhesive layer on the side that is not subject to deformation can continue to firmly adhere the base materials together, as depicted in FIG. 5, for example. This is because even if the adhesive layer is as thin as 1 mm or less, when an external force acts to separate the adhered base materials, the adhesive layer as a whole can achieve high peel strength.

The amount of the curable adhesive composition applied in step (I) is preferably such that the width of the entire adhesive layer obtained by integration after step (III) is in the range of 5 to 50 mm, and in practical terms, is preferably in the range of 10 to 45 mm.

Similarly, the laminate body according to the present invention satisfies the required properties for compactness, and thus has the advantage of being able to achieve high peel strength even when the overall thickness of the adhesive layer is designed to be thin. Therefore, the curable adhesive composition in step (I) is preferably applied in an amount such that the overall thickness (after curing) of the integrated adhesive layer after step (III) is 1 mm or less, and particularly preferable applied in an amount such that the thickness of the adhesive layer is in the range of 0.01 to 1.00 mm. Note that the thickness of the cured adhesive layer can also be adjusted by applying pressure to the curable adhesive compositions applied in parallel to each other such that the compositions have a constant thickness in step (III) to be described later.

Step (II) is a step for adhering the second fabric- or sheet-like base material (S2) onto the curable adhesive compositions applied in step (I). On the other hand, step (III) is a step for integrating two or more types of curable adhesive compositions by contacting or pressure-bonding together, and step (III) may be performed simultaneously with, before, after, or at any timing other than step (II), so long as the step is performed after step (I). Conveniently, step (III) is for integrating the two or more types of curable adhesive compositions applied in parallel by pressure-bonding the compositions between the first fabric- or sheet-like base material (S1) and second fabric- or sheet-like base material (S2), which are adhered together, after or simultaneously with step (II), such that the thickness of the cured adhesive layer is 1 mm or less. For example, the second fabric- or sheet-like base material (S2) is adhered onto the curable adhesive composition applied in parallel in step (I), and then, simultaneously with or after the adhering, pressure is applied (e.g., by pressing by hand or with a pressing machine) to the curable adhesive composition applied in parallel from one or both sides of the base material. Thus, the curable adhesive compositions applied in parallel can be integrated without a gap, and the thickness of the cured adhesive layer can be adjusted to the desired thinness (preferably 1 mm or less).

Step (IV) is a step for curing the integrated two or more types of curable adhesive compositions by a curing reaction to form the adhesive layer between the first fabric- or sheet-like base material (S1) and the second fabric- or sheet-like base material (S2), and can be selected in accordance with the type of the curable adhesive composition. For example, when the curable adhesive composition according to the present invention is a curable silicone rubber composition that cures by a hydrosilylation reaction, the entire laminate body is heated and cured, for example, by placing in a hot air drying furnace or the like, typically at a curing temperature in the range of 20°C to 200°C, and preferably 90 to 150°C, for a period of several seconds to several hours in accordance with the thickness of the adhesive layer and the application shape.

The laminate body according to the present invention may further have a functional coating layer on a surface or an inner surface, and preferably on both surfaces, of a base material constituting the laminate body at an arbitrary timing (e.g., before or after step (IV) or at the stage of the base material before lamination). For example, a curable resin coating layer may be provided for the purpose of improving heat resistance, flame retardancy, and mechanical strength (tear strength or the like), or may have a curable silicone rubber layer. For example, a laminate body having a silicone rubber layer on the surface of the base material may be formed by applying the curable silicone rubber layer onto both surfaces of the laminate body or the base material (e.g., base fabric) at a timing before or after step (IV), then placing the entire laminate body in a hot air drying furnace or the like to heat and cure the laminate body. Note that the step for forming a functional coating layer on the surface of the base material or laminate body may be performed simultaneously with the abovementioned steps (I) to (IV). For example, the formation of an adhesive layer in step (IV) and the formation of the functional coating layer on the surface of the base material or laminate body may be performed simultaneously by placing in a hot air drying furnace, or the like. Furthermore, the method for forming the coating layer is not particularly limited, and any known coating method may be used, such as coating the base material or laminate body surface with a curable resin coating agent evenly and uniformly using a knife coater, or the like.

The coating amount of the functional coating layer can be selected arbitrarily depending on the function and purpose of the coating layer, but when the laminate body is an airbag for use in a vehicle, the coating agent is preferably applied in an amount of 35 g/m² or less such that the burning rate in the combustion test for automotive interior materials, FMVSS No. 302, is 80 mm/min or less.

When the laminate body according to the present invention has a specific site that is subject to particularly strong heat or tensile stress, the laminate body may include a step for further attaching a reinforcing base material or a heat-resistant base material at an arbitrary timing for the purpose of reinforcement, damage prevention, or improvement of heat resistance or the like. For example, when the laminate body according to the present invention is an airbag that unfolds and expands by expansion gas ejected from an inflator, a step may be provided for arranging a heat-resistant reinforcing fabric having a thickness of about 5 to 50 µm as a reinforcing base material or heat-resistant base material in a portion of the airbag that comes into contact with the expansion gas.

Furthermore, in order for the laminate body according to the present invention to satisfy the required properties for compactness, a step may be further provided for deforming the obtained laminate body into a structure suitable for sewing, folding, storage, or the like.

### [Method for Adhering Base Materials Together]

The present invention can be widely used as a method for adhering base materials together, and even if the adhesive layer is thin, when an external force acts to move the adhered base materials apart, the adhesive layer as a whole can achieve high peel strength. Note that when used as a method for adhering base materials together, the shape and thickness of the base materials are arbitrary, and the method can be used to adhere arbitrary base materials, not just fabric-like or sheet-like base materials.

Specifically, the method of adhering base materials together according to the present invention includes the following steps:
step (I'): a step for applying, in parallel to each other, two or more types of curable adhesive compositions, one having 2 to 5 times more stress at 10 mm elongation in a stress-strain curve when cured, onto a first base material;
step (II'): a step for adhering a second base material onto the curable adhesive compositions applied in step (I');
step (III'): a step for integrating the two or more types of curable adhesive compositions by contacting or pressure-bonding the compositions together between the first base material and second base material, before, after, or simultaneously with step (II'); and
step (IV'): a step for curing the integrated two or more types of curable adhesive compositions by a curing reaction to form the adhesive layer between the first base material and second base material.

The abovementioned steps (I') to (IV') are steps similar to steps (I) to (IV) in the method for manufacturing a laminate body, and can be performed in the same manner as steps (I) to (IV) except that the shapes of the first base material and the second base material are not limited to fabric- or sheet-like base materials. In particular, when the two base materials deform so as to move away from each other, the aforementioned step (I') may be a step for applying the compositions such that the curable adhesive composition that forms an adhesive layer with low stress at 10 mm elongation is disposed on the side that is subject to deformation, and the curable adhesive composition that forms an adhesive layer with high stress at 10 mm elongation is disposed on the side that is not subject to deformation, for the same reasons as described in step (I). Furthermore, the curable adhesive composition that can be used in the adhering method according to the present invention is similar to that described above, and a curable silicone rubber composition can be suitably used.

### EXAMPLES

The laminate body of the present invention, the manufacturing method thereof, and the method for adhering base materials together will be described below with reference to examples. However, the laminate body and the like according to the present invention are not limited to the following examples, and it goes without saying that they can also be implemented using a curable adhesive composition other than a silicone-based composition.

### [Stress-Strain Curve Measurement]

A test piece having a 1 mm adhesive layer was measured by pulling both end parts of a base material at a tension rate of 200 mm/min using a tensile tester under conditions of 25°C and 50% RH (relative humidity), as depicted in FIG. 4, to measure the stress-strain curve thereof.

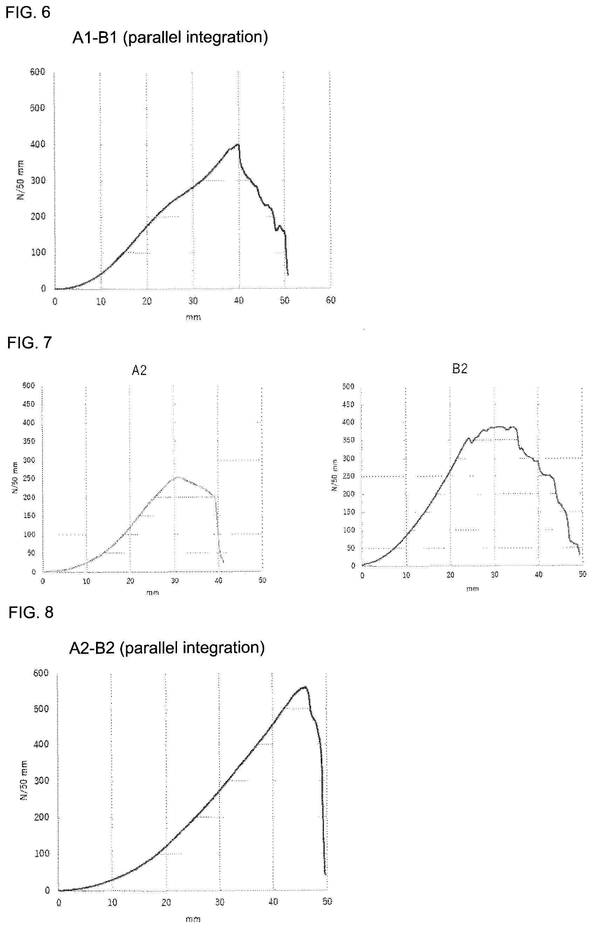

Herein, the measured stress (N/50 mm) values at 10 mm elongation for curable silicone rubber compositions A1, B1, A2, and B2, which exhibit the stress-strain curves depicted in FIGS. 5 and 7, are shown in Table 1 below. Furthermore, numbers in the drawings of the stress-strain curves in which both adhesive layers are integrated are also shown in the table.

**[Table 1]**

| Curable silicone rubber composition | A1 | B1 | A2 | B2 |
|---|---|---|---|---|
| Stress (N/50 mm) of adhesive layer at 10 mm elongation | 42 (FIG. 5, left) | 136 (FIG. 5 right) | 26 (FIG. 7, left) | 68 (FIG. 7 right) |
| Stress-strain curve in which both are integrated | FIG. 6 (A1-B1: Example 1) | | FIG. 8 (A2-B2: Example 1) | |

### [Example 1]

The curable silicone rubber compositions A1 and B1, each of which individually exhibits the stress-strain curve depicted in FIG. 5, were applied in parallel onto a first base fabric, as depicted in FIG. 2, from a 6 mm diameter nozzle with a centerline spacing of 10 mm. A second base fabric was then placed on top of the fabric via a 1 mm thick spacer, and compressed from above such that the applied curable silicone rubber compositions A1/B1 were integrated. This was then cured for 24 hours at 25°C and 50% RH, yielding a test piece (laminate body) including an integrated adhesive layer of 1 mm thick parallel adhesive layers containing the curable silicone rubber compositions A1/B1. Note that when applying the curable silicone rubber compositions A1 and B1, in order to measure the stress-strain curve of the test piece, the curable silicone rubber composition A1, which forms a low-modulus adhesive layer, was applied to the side on which a force acts, moving a base material away due to tensile stress, and the curable silicone rubber composition B1, which forms a high-modulus adhesive layer, was applied to the opposite side. These adhesive layers were integrated.

As depicted in FIG. 6, the stress-strain curve of the adhesive layer formed by curing and integrating the curable silicone rubber compositions A1 and B1, which were applied in parallel, had a much higher tensile stress peak value than the stress-strain curves when either adhesive layer was used alone, and the elongation (mm) providing the peak value was much longer than the yield point when either was used alone, thereby achieving high peel strength.

### [Example 2]

A test piece (laminate body) having an adhesive layer in which parallel adhesive layers, each having a thickness of 1 mm and containing curable silicone rubber compositions A2/B2, were integrated was obtained in the same manner as in Example 1, except that the curable silicone rubber compositions A2 and B2, which exhibit the stress-strain curves depicted in FIG. 7, were used instead of the curable silicone rubber compositions A1 and B1.

As depicted in FIG. 8, the stress-strain curve of the adhesive layer formed by curing and integrating the curable silicone rubber compositions A2 and B2, which were applied in parallel, had a much higher tensile stress peak value than the stress-strain curves when either adhesive layer was used alone, and the elongation (mm) providing the peak value was much longer than the yield point when either was used alone, thereby achieving high peel strength.

### [Comparative Example 1 (Dot Pattern Application)]

A test piece (laminate body) having an adhesive layer in which dot-like adhesive layers, each having a thickness of 1 mm and containing the curable silicone rubber compositions A2/B2, were applied in an overlaid manner and then integrated was obtained in the same manner as in Example 2, except that the curable silicone rubber compositions A2 and B2, which exhibit the stress-strain curves depicted in FIG. 7, were applied in dot patterns from a nozzle with a diameter of 2 mm over the same application area as in Example 2, instead of being applied in parallel.

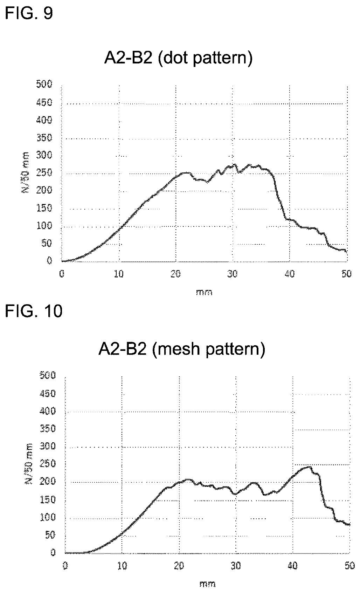

As depicted in FIG. 9, the stress-strain curve of the adhesive layer formed by curing the curable silicone rubber compositions A2 and B2 applied in a dot pattern and integrating the two differs from the stress-strain curve of the adhesive layer according to Example 2 depicted in FIG. 8, in that the elongation (mm) providing the peak value of tensile stress was smaller than that of the adhesive layer B1 (alone), and the peak value of tensile stress was also lower. For this reason, it was found that even if two or more types of curable adhesive compositions whose stresses at 10 mm elongation in the stress-strain curve upon curing are in the range of 2 to 5 times each other are used, high peel strength cannot be achieved when both are applied in a dot pattern.

### [Comparative Example 2 (Net Pattern Application)]

A test piece (laminate body) having an adhesive layer in which mesh-like adhesive layers, each having a thickness of 1 mm and containing the curable silicone rubber compositions A2/B2, were applied in an overlaid manner and then integrated was obtained in the same manner as in Example 2, except that the curable silicone rubber compositions A2 and B2, which exhibit the stress-strain curves depicted in FIG. 7, were applied, in a manner where both intersected to form a mesh pattern, from a nozzle with a diameter of 2 mm over the same application area as in Example 2, instead of being applied in parallel.

As depicted in FIG. 10, the stress-strain curve of the adhesive layer formed by curing the curable silicone rubber compositions A2 and B2 applied in a mesh pattern and integrating the two differs from the stress-strain curve of the adhesive layer according to Example 2 depicted in FIG. 8, in that although the elongation (mm) providing the peak value of tensile stress is greater than that of the adhesive layer B2 (alone), the peak value of tensile stress is lower not only than that of the adhesive layer B2 (alone) but also than that of the adhesive layer A2 (alone). For this reason, even if two or more types of curable adhesive compositions are used in which the stress at 10 mm elongation in the stress-strain curve upon curing is in the range of 2 to 5 times that of each other, if the two compositions are not parallel but are applied intersecting in a mesh-like pattern, it was found that high peel strength cannot be achieved.

### [Summary]

As depicted in FIGS. 6 and 8, the laminate body according to the present invention is formed by curing two types of curable silicone rubber compositions (A, B) that are applied in parallel and have stresses at 10 mm elongation in the stress-strain curves after curing that are in the range of 2 to 5 times that of each other, and has an adhesive layer in which both are integrated. This indicates that even a thin adhesive layer can achieve high peel strength between the base fabrics. On the other hand, as depicted in FIG. 9 (dot pattern application) and FIG. 10 (mesh pattern application), if the two types of curable silicone rubber compositions (A, B) are not applied in parallel, even if the two are integrated into an adhesive layer, high peel strength cannot be achieved between the base fabrics, and thus a technical effect of the present invention cannot be achieved.

### INDUSTRIAL APPLICABILITY

The laminate body of the present invention can achieve high peel strength even with a thin adhesive layer when an external force is applied so as to move the adhered base materials apart, and thus can be used to design compact structures. This has the advantage of being able to provide laminate materials and structures that are thin and have excellent peel strength, and that meet requirements for thinning, foldability, storability, lighter weight, and the like, such as for outdoor products, packaging materials, protective sheets, functional films, vehicle airbags, and the like. Furthermore, the laminate body does not require sewing or a thick adhesive layer, and thus has an excellent appearance and is space-saving, and has the advantage of being able to be stored or stowed compactly and in a light weight manner, even in a small space.

### DESCRIPTION OF CODES

1. Fabric-like base material 1
2. Fabric-like base material 2
A1. Adhesive layer A1
A2. Adhesive layer A2

## Claims

1. A laminate body, comprising a structure in which
(S1) a first fabric or sheet-like base material and
(S2) a second fabric or sheet-like base material
are adhered together by
(A) an adhesive layer in which two or more types of curable adhesive compositions, one having 2 to 5 times more stress at 10 mm elongation in a stress-strain curve when cured, are applied in parallel to each other and integrated with each other.

2. The laminate body according to claim 1, wherein among the two or more types of curable adhesive compositions constituting the adhesive layer,
(a1) the stress Fₐ₁ at 10 mm elongation of the adhesive layer formed by curing the curable adhesive composition having the highest tensile stress is in the range of 40 to 240 (N/50 mm),
(a2) the stress Fₐ₂ at 10 mm elongation of the adhesive layer formed by curing the curable adhesive composition having the lowest tensile stress is in the range of 20 to 60 (N/50 mm), and
the value of [Fₐ₁/Fₐ₂] is in the range of 2.0 to 4.0.

3. The laminate body according to claim 1 or 2, wherein when the two adhered base materials constituting the laminate body deform so as to move away from each other, the curable adhesive composition that forms an adhesive layer with low stress at 10 mm elongation is disposed on the side that is subject to deformation, the curable adhesive composition that forms an adhesive layer with high stress at 10 mm elongation is disposed on the side that is not subject to deformation, and the adhesive layers with different stresses at 10 mm elongation are integrated together.

4. The laminate body according to any one of claims 1 to 3, wherein the adhesive layer is obtained by curing two types of curable adhesive compositions, the two types of curable adhesive compositions being applied parallel to each other and cured to integration.

5. The laminate body according to any one of claims 1 to 3, wherein the width of the integrated adhesive layer as a whole is in the range of 5 to 50 mm, and the thickness thereof is 1 mm or less.

6. The laminate body according to any one of claims 1 to 3, wherein the curable adhesive compositions forming the adhesive layer are mutually independently at least one elastic adhesive composition selected from acrylic adhesives, urethane adhesives, epoxy adhesives, vinyl acetate adhesives, styrene-butadiene rubber adhesives, natural rubber adhesives, and silicone adhesives.

7. The laminate body according to any one of claims 1 to 3, wherein a curable adhesive composition forming the adhesive layer is a curable silicone rubber composition containing:
(A) 100 parts by mass of a diorganopolysiloxane having at least two alkenyl groups in a molecule;
(B) 5 to 100 parts by mass of an organopolysiloxane resin and/or inorganic filler;
(C) an organopolysiloxane having at least two silicon atom-bonded hydrogen atoms in a molecule {in an amount such that the amount of silicon atom-bonded hydrogen atoms in this component is 0.6 to 20 mol per 1 mol of total alkenyl groups in components (A) and (B)}; and
(D) a catalytic amount of a hydrosilylation reaction catalyst.

8. A method for manufacturing the laminate body according to any one of claims 1 to 6, the method comprising:
step (I): a step for applying, in parallel to each other, the two or more types of curable adhesive compositions, one having 2 to 5 times more stress at 10 mm elongation in a stress-strain curve when cured, onto the first fabric- or sheet-like base material (S1);
step (II): a step for adhering the second fabric- or sheet-like base material (S2) onto the curable adhesive compositions applied in step (I);
step (III): a step for integrating the two or more types of curable adhesive compositions by contacting or pressure-bonding the compositions together before, after, or simultaneously with step (II); and
step (IV): a step for curing the integrated two or more types of curable adhesive compositions by a curing reaction to form the adhesive layer between the first fabric- or sheet-like base material (S1) and the second fabric- or sheet-like base material (S2).

9. The method for manufacturing the laminate body according to claim 8, wherein the aforementioned step (III) is a step for integrating the two or more types of curable adhesive compositions applied in parallel by contacting or pressure-bonding the compositions between the first fabric- or sheet-like base material (S1) and second fabric- or sheet-like base material (S2), such that the thickness of the cured adhesive layer is 1 mm or less.

10. The method for manufacturing the laminate body according to claim 8, wherein when the two adhered base materials constituting the laminate body deform so as to move away from each other,
the aforementioned step (I) is a step for applying the compositions such that the curable adhesive composition that forms an adhesive layer with low stress at 10 mm elongation is disposed on the side that is subject to deformation, and the curable adhesive composition that forms an adhesive layer with high stress at 10 mm elongation is disposed on the side that is not subject to deformation, and
the aforementioned step (III) is a step for integrating the two or more types of curable adhesive compositions applied in parallel by pressure-bonding the compositions between the first fabric- or sheet-like base material (S1) and second fabric- or sheet-like base material (S2), which are adhered together, after or simultaneously with step (II), such that the thickness of the cured adhesive layer is 1 mm or less.

11. A method for adhering base materials together, the method comprising:
step (I'): a step for applying, in parallel to each other, two or more types of curable adhesive compositions, one having 2 to 5 times more stress at 10 mm elongation in a stress-strain curve when cured, onto a first base material;
step (II'): a step for adhering a second base material onto the curable adhesive compositions applied in step (I');
step (III'): a step for integrating the two or more types of curable adhesive compositions by contacting or pressure-bonding the compositions together between the first base material and second base material, before, after, or simultaneously with step (II'); and
step (IV'): a step for curing the integrated two or more types of curable adhesive compositions by a curing reaction to form the adhesive layer between the first base material and second base material.

12. The method for adhering base materials together according to claim 11, wherein when the two base materials deform so as to move away from each other,
the aforementioned step (I') is a step for applying the compositions such that the curable adhesive composition that forms an adhesive layer with low stress at 10 mm elongation is disposed on the side that is subject to deformation, and the curable adhesive composition that forms an adhesive layer with high stress at 10 mm elongation is disposed on the side that is not subject to deformation.

13. The method for manufacturing the laminate body according to claim 8 or the method for adhering base materials together according to claim 11, wherein a curable adhesive composition forming the adhesive layer is a curable silicone rubber composition containing:
(A) 100 parts by mass of a diorganopolysiloxane having at least two alkenyl groups in a molecule;
(B) 5 to 100 parts by mass of an organopolysiloxane resin and/or inorganic filler;
(C) an organopolysiloxane having at least two silicon atom-bonded hydrogen atoms in a molecule {in an amount such that the amount of silicon atom-bonded hydrogen atoms in this component is 0.6 to 20 mol per 1 mol of total alkenyl groups in components (A) and (B)}; and
(D) a catalytic amount of a hydrosilylation reaction catalyst.
